# EUROPÄISCHE PATENTSCHRIFT

(11) **EP 2 307 775 B1**
(45) Veröffentlichungstag und Bekanntmachung des Hinweises auf die Patenterteilung: **14.01.2015**
(21) Anmeldenummer: 09777299.0
(22) Anmeldetag: 20.07.2009
(51) Int. Cl.: F16K 17/10, F16K 27/00

(54) **VENTILGEHÄUSE**
VALVE HOUSING
CORPS DE VANNE

(30) Priorität: 29.07.2008 DE 102008035356
(43) Veröffentlichungstag der Anmeldung: 13.04.2011
(73) Patentinhaber: Robert Bosch GmbH, 70469 Stuttgart (DE)
(72) Erfinder: MÜHLHOFF, Holger, 63768 Hösbach (DE); EISELE, Christoph, 97816 Lohr am Main (DE)
(74) Vertreter: Thürer, Andreas
(86) Internationale Anmeldenummer: PCT/EP2009/005247
(87) Internationale Veröffentlichungsnummer: WO 2010/012393

(56) Entgegenhaltungen:
- EP-A- 0 425 236
- EP-A- 0 717 227
- EP-A- 1 304 476
- WO-A-01/86138
- DE-A1-102006 007 363
- US-A- 5 292 072
- US-A1- 2005 144 558

## Beschreibung

Die Erfindung betrifft ein Ventilgehäuse gemäß dem Oberbegriff des Patentanspruchs 1. Ein derartiges Ventilgehäuse ist aus der WO-A-01/86138 bekannt.

Bei derartigen Ventilgehäusen ist üblicherweise eine Hauptbohrung vorgesehen, in der ein Ventilkolben geführt ist, und mehrere Verbindungs- oder Nebenbohrungen, die in die Hauptbohrung einmünden. In die Verbindungs- oder Nebenbohrungen werden z.B. Ventile eingeschraubt, oder die Bohrungen führen zu Anschlüssen mit Ventilen. Dabei sind die Durchmesser der Verbindungs- oder Nebenbohrungen oft deutlich kleiner, als diejenigen der Hauptbohrung.

An derartigen Mündungen bzw. Bohrungsverschneidungen, deren prinzipielle Form meistens durch den geometrischen Schnitt zweier Kreiszylinder mit unterschiedlichen Durchmessern definiert ist, ergeben sich insbesondere bei einem Einsatz des Ventils im Hochdruckbereich lokal große Materialspannungen. Diese Materialspannungen werden erhöht, wenn die Außenwand des Ventilgehäuses unterschiedliche Stärken aufweist. Dadurch wird das Material des meistens aus Grauguss bestehenden Ventilgehäuses stark beansprucht, und es können Risse in den Mündungsbereichen der Verbindungs- bzw. Nebenbohrungen in die Hauptbohrung entstehen.

Dem entsprechend liegt der Erfindung die Aufgabe zugrunde, hohe Material-spannungen in den Mündungsbereichen von Verbindungs- bzw. Nebenbohrungen in Hauptbohrungen von Ventilgehäusen mit unterschiedlicher Wandstärke zu vermeiden.

Diese Aufgabe wird gelöst durch ein Ventilgehäuse nach Patentanspruch 1.

Das erfindungsgemäße Ventilgehäuse hat eine Hauptbohrung und eine oder mehrere Verbindungs- bzw. Nebenbohrungen, deren Durchmesser kleiner sind als der Durchmesser der Hauptbohrung, wobei die Verbindungs- bzw. Nebenbohrungen in eine die Hauptbohrung begrenzenden Seitenwand einmünden. Das Ventilgehäuse hat in diesen Mündungsbereichen zur Verringerung von Materialspannungen jeweils eine Spannungsreduzierungsnut, wobei diese die Nebenbohrung und die Hauptbohrung verbindet. Durch diese Nuten werden auch Ventilgehäusewandungen mit geringen Stärken bzw. mit unterschiedlichen Stärken möglich, ohne dass in den Mündungsbereichen Risse durch zu hohe Zugbeanspruchung des Materials auftreten. Die Spannungen, die durch Druckbeaufschlagung der Ventileinbaubohrung bzw. Hauptbohrung durch unterschiedliche äußere Abmaße und daraus resultierende unterschiedliche Verformung an dünnen bzw. dicken Wandungen erzeugt werden, können durch die erfindungsgemäßen Spannungsreduzierungsnuten minimiert bzw. optimiert werden.

Erfindungsgemäß hat die Spannungsreduzierungsnut im Wesentlichen die Form eines Kreisscheibensegments, dessen Durchmesser kleiner ist als der Durchmesser der Hauptbohrung im Mündungsbereich, wobei der Durchmesser des Kreisscheibensegments vorzugsweise etwa 2/3 des Durchmessers der Hauptbohrung im Mündungsbereich beträgt. Durch diese Formgebung ist die Fertigung der Nut vereinfacht, da ein Scheibenfräser zunächst konzentrisch in die Hauptbohrung des Ventilgehäuses eingeführt und dann zur Ausbildung der Nut radial in die die Hauptbohrung begrenzende Seitenwand verfahren werden kann.

Es wird bevorzugt, wenn die erfindungsgemäße Spannungsreduzierungsnut ausgehend von einer nebenbohrungsseitigen Mündung bis zu einer hauptbohrungsseitigen Mündung eine Querschnittsvergrößerung aufweist. Bei einer bevorzugten Weiterbildung der Spannungsreduzierungsnut ist ihr Querschnitt in Blickrichtung entlang der Längsachse der Hauptbohrung gesehen etwa sichelförmig ausgebildet. Durch diese Formgebung ist im Mündungsbereich eine Ventilgehäusewandungen mit verringerter Stärke möglich, ohne dass Risse durch zu hohe Zugbeanspruchung des Materials auftreten.

Bei dem Ventilgehäuse ist die Axialerstreckung der hauptbohrungsseitigen Mündung in Richtung der Längsachse der Hauptbohrung betrachtet wesentlich geringer als die Umfangserstreckung der hauptbohrungsseitigen Mündung entlang dem Umfang der Hauptbohrung.

Je nach Auslegung des erfindungsgemäßen Ventilgehäuses beträgt die Umfangserstreckung der hauptbohrungsseitigen Mündung maximal die Hälfte des Umfangs der Hauptbohrung im Mündungsbereich, wobei die Umfangserstreckung der hauptbohrungsseitigen Mündung vorzugsweise etwa ein Viertel des Umfangs der Hauptbohrung im Mündungsbereich beträgt.

Bei einer bevorzugten Variante des Ventilgehäuses schneiden sich die Längsachsen der Hauptbohrung und der Verbindungs- bzw. Nebenbohrung im rechten Winkel.

Es wird alternativ zu gefrästen Spannungsreduzierungsnuten bevorzugt, wenn diese von angegossenen Vertiefungen bzw. Aussparungen gebildet sind. Die Vertiefungen bzw. Aussparungen können durch entsprechend am Kern einer Gussform ausgebildete Vorsprünge erzeugt werden.

Im Folgenden wird anhand der Figuren ein bevorzugtes Ausführungsbeispiel der Erfindung detailliert beschrieben. Es zeigen:
Figur 1 ein bevorzugtes Ausführungsbeispiel eines erfindungsgemäßen Ventilgehäuses eines Hochdruckbegrenzungsventils in einer Seitenansicht;
Figur 2 einen Schnitt C-C des Ventilgehäuses gemäß Figur 1; und
Figur 3 einen weiteren Schnitt D-D des Ventilgehäuses gemäß Figur 1.

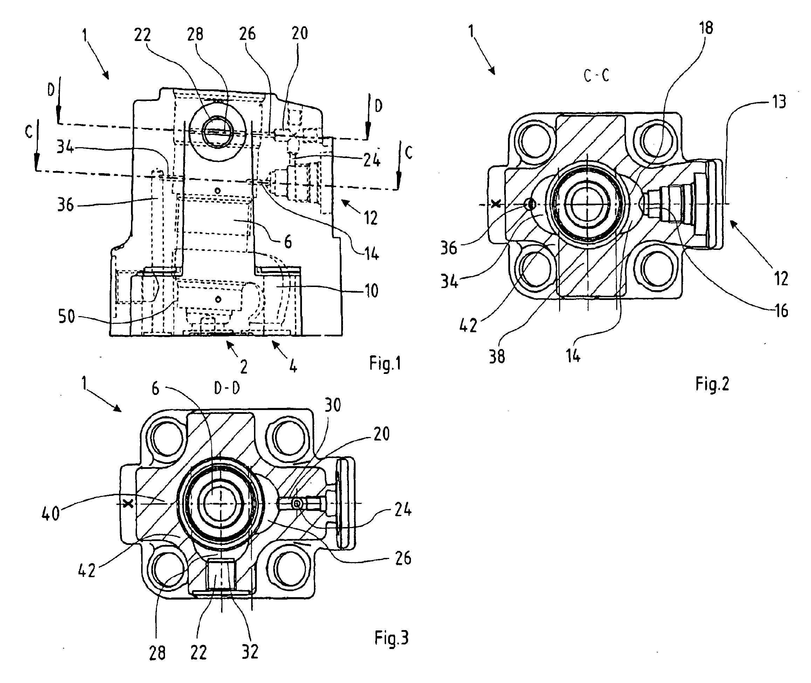

Figur 1 zeigt ein bevorzugtes Ausführungsbeispiel eines erfindungsgemäßen Ventilgehäuses 1 eines vorgesteuerten Druckbegrenzungsventils für den Einsatz im Hockdruckbereich. Das Druckbegrenzungsventil begrenzt einen an einem Hauptanschluss 2 anliegenden Systemdruck und entlastet diesen Hauptanschluss 2 bei Überschreiten des Maximaldrucks zum Tankanschluss 4. Dazu ist ein nicht gezeigter Ventilkörper in einer im Wesentlichen kreiszylinderförmigen Ventileinbau- bzw. Hauptbohrung 6 fest eingeschraubt. Diese Hauptbohrung 6 erstreckt sich im Ventilgehäuse 1 in der in Figur 1 gezeigten Darstellung etwa senkrecht.

Bis zum Erreichen eines vorbestimmten maximalen Systemdrucks am Hauptanschluss 2 bleibt der nicht gezeigte Ventilkörper verschlossen, und bei Überschreiten des Maximaldrucks wird ein Durchlass im Ventilkörper freigegeben, so dass Druckmittel vom Hauptanschluss 2 durch einen Tankkanal 10 zum Tankanschluss 4 abströmen kann.

An der Trennstelle 50 zwischen Hauptanschluss 2 und Tankanschluss 4 besitzt das Ventil eine nicht metallische Abdichtung.

Der maximale Systemdruck, der am Hauptanschluss 2 zu einer Öffnungsbewegung des Ventilkörpers in Figur 1 nach oben führt, ist durch einen Steuerdruck einstellbar, der an einer Oberseite des Ventilkörpers anliegt und somit in Figur 1 nach unten wirkt. Dieser Steuerdruck wird von einem nicht gezeigten Vorsteuerventil bestimmt, das an einer Vorsteuerventilbohrung 12 des Ventilgehäuses 1 eingeschraubt ist. Die Vorsteuerventilbohrung 12 hat einen kleineren Durchmesser als die Hauptbohrung 6, wobei die Längsachsen der beiden Bohrungen sich etwa im rechten Winkel schneiden.

Figur 2 zeigt einen Schnitt durch die Ebene C-C der Figur 1 und verläuft somit auch durch die Vorsteuerventilbohrung 12. Im Übergang bzw. Mündungsbereich der Vorsteuerventilbohrung 12 in die Hauptbohrung 6 ist eine erfindungsgemäße Spannungsreduzierungsnut 14 angeordnet. Diese Nut 14 hat in dem waagerechten C-C Schnitt gemäß Figur 2 die Form einer symmetrischen Sichel bzw. eines Kreissegments. In Figur 1 ist gezeigt, dass die Spannungsreduzierungsnut 14 in Richtung der Längsachse der Hauptbohrung 6 eine relativ geringe und im Wesentlichen gleichbleibende Ausdehnung hat.

In Figur 2 ist die sich zu den Endabschnitten der Nut 14 verringernde Tiefe erkennbar, wodurch sich eine stetige Querschnittsvergrößerung der Spannungsreduzierungsnut 14 in ihrer Erstreckung ausgehend von einer steuerventilbohrungsseitigen Mündung 16 bis zu einer hauptbohrungsseitigen Mündung 18 ergibt.

Neben der Vorsteuerventilbohrung 12 sind im steuerdruckseitigen Abschnitt der Hauptbohrung 6 (in Figur 1 oben) zwei weitere senkrecht zueinander angeordnete Nebenbohrungen 20, 22 angeordnet, die beide als Radialbohrungen in die Hauptbohrung 6 einmünden. Die Nebenbohrungen 20, 22 sind in der gemeinsamen Schnittebene D-D angeordnet, die in Figur 3 gezeigt ist. Die Nebenbohrung 20 ist durch einen Verbindungskanal 24 mit der Vorsteuerventilbohrung 12 verbunden, während die Nebenbohrung 22 ein Anschluss für Steuerdruckmittel zum Tank ist.

Wie in Figur 3 dargestellt, haben auch die beiden Nebenbohrungen 20, 22 in ihrem jeweiligen Mündungsbereich eine Spannungsreduzierungsnut 26, 28, die im Wesentlichen die Form der Spannungsreduzierungsnut 14 aufweisen. Dabei hat eine nebenbohrungsseitige Mündung 30 der Nut 26 einen kleineren und eine nebenbohrungsseitige Mündung 32 der Nut 28 einen größeren Querschnitt als die Nut 14.

In den Figuren 1 und 2 ist eine vierte erfindungsgemäße Spannungsreduzierungsnut 34 dargestellt, die im Mündungsbereich eines etwa parallel zur Hauptbohrung 6 verlaufenden Entlastungskanals 36 angeordnet ist. Die Form der Nut 34 entspricht im Wesentlichen der Form der Nut 26.

Bei einem einfachen Fertigungsverfahren zur Ausbildung der erfindungsgemäßen Spannungsreduzierungsnuten 14, 26, 28, 34 kann ein Scheibenfräser, dessen Durchmesser etwa 2/3 des Durchmessers der Hauptbohrung 6 beträgt, in diese eingeführt werden, und durch eine Seitwärtsbewegung (in der Figur 2 z.B. nach rechts oder links) die Spannungsreduzierungsnuten 14, 26, 28, 34 ausnehmen. Dabei ist die Breite der Nuten 14, 26, 28, 34 durch die Dicke des Scheibenfräsers wählbar.

Durch die in dem Ausführungsbeispiel gemäß Figuren 1 bis 3 gezeigten Spannungsreduzierungsnuten 14, 26, 28, 34 werden Spannungen, die im Material des Ventilgehäuses 1 nach dem Stand der Technik in den Mündungsbereichen von Nebenbohrungen in Hauptbohrungen auftreten, reduziert, so dass Rissbildung auch bei dauerhafter und hoher Belastung durch Druckmittel vermieden wird. Kritisch sind dabei Bereiche 38, 40 (siehe Figuren 2 und 3) in denen solche Nebenbohrungen angeordnet sind. In diesen treten bei herkömmlichen Konstruktionen Risse auf, selbst wenn die umgebenden Bereiche 42 eine hohe Wandstärke aufweisen.

Erfindungsgemäß können nicht nur die kritischen Bereiche sondern insbesondere auch umgebende oft dünnere Stellen 42 des Gehäuses material- und platzsparend ausgebildet werden, ohne dadurch zu hohe Spannungen an den kritischen Stellen 38, 40 zu bekommen. Dadurch kann das erfindungsgemäße Ventilgehäuse 1 kompakt, materialsparend und dabei dauerhaft hochdruckfest ausgebildet sein.

Bei gleichbleibenden Außenmaßen können Ventile mit den erfindungsgemäßen Ventilgehäusen größer und damit leistungsfähiger dimensioniert werden.

Abweichend von dem in den Figuren 1 bis 3 gezeigten Ausführungsbeispiel eines Ventilgehäuses 1 eines Druckbegrenzungsventils mit erfindungsgemäßen Spannungsreduzierungsnuten können diese Nuten auch bei anderen Ventiltypen eingebracht werden.

Die Maße bzw. Größenverhältnisse können von den gezeigten Nuten abweichen, so können sich die Nuten über einen längeren Umfangsabschnitt der Hauptbohrung 6 (bis maximal dem halben Umfang) erstrecken, die Nuttiefen können variieren und die Breite der Nuten kann z. B. größer (als in Figur 1 dargestellt) sein.

Weiterhin kann die geometrische Form der Nuten auch von der gezeigten Sichel- bzw. Kreissegmentform abweichen (z. B. V-Form).

Offenbart ist ein Ventilgehäuse mit einer Hauptbohrung und eine Verbindungs- bzw. Nebenbohrung, deren Durchmesser kleiner ist als der Durchmesser der Hauptbohrung. Die Verbindungs- bzw. Nebenbohrung mündet in eine die Hauptbohrung begrenzenden Seitenwand ein, wobei die Seitenwand am Umfang verteilt unterschiedliche Materialstärken aufweist. Erfindungsgemäß hat das Ventilgehäuse in diesem Mündungsbereich zur Verringerung von Materialspannungen eine Spannungsreduzierungsnut, die in die Seitenwand der Hauptbohrung eingelassen ist.

Die Spannungen, die durch Druckbeaufschlagung der Ventileinbaubohrung bzw: Hauptbohrung durch unterschiedliche äußere Abmaße und daraus resultierende unterschiedliche Verformung an dünnen bzw. dicken Wandungen erzeugt werden, können durch die Spannungsreduzierungsnuten minimiert bzw. optimiert werden.

## Patentansprüche

1. Ventilgehäuse (1) mit einer Hauptbohrung (6) und mindestens einer Nebenbohrung (12, 20, 22, 36), deren Durchmesser kleiner sind als der Durchmesser der Hauptbohrung (6), wobei die mindestens eine Nebenbohrung (12, 20, 22, 36) in eine die Hauptbohrung (6) begrenzenden Seitenwand mündet, und wobei die mindestens eine Nebenbohrung (12, 20, 22, 36) mit der Hauptbohrung (6) durch je eine Spannungsreduzierungsnut (14, 26, 28, 34) verbunden ist um Materialspannungen im Mündungsbereich zu reduzieren, wobei die Axialerstreckung einer hauptbohrungsseitigen Mündung der Spannungsreduzierungsnut in Richtung einer Längsachse der Hauptbohrung (6) wesentlich geringer ist als ihre Umfangserstreckung, **dadurch gekennzeichnet, dass** die mindestens eine Spannungsreduzierungsnut (14, 26, 28, 34) im Wesentlichen die Form eines Kreisscheibensegments hat, dessen Durchmesser kleiner als der Durchmesser der Hauptbohrung (6) im Mündungsbereich ist.

2. Ventilgehäuse (1) nach Anspruch 1, wobei jede Spannungsreduzierungsnut (14, 26, 28, 34) ausgehend von einer nebenbohrungsseitigen Mündung bis zur hauptbohrungsseitigen Mündung eine Querschnittsvergrößerung aufweist.

3. Ventilgehäuse (1) nach Anspruch 1 oder 2, wobei ein Querschnitt der Spannungsreduzierungsnut/en (14, 26, 28, 34) entlang der Längsachse der Hauptbohrung (6) gesehen etwa sichelförmig ausgebildet ist.

4. Ventilgehäuse (1) nach einem der vorangegangenen Ansprüche, wobei der Durchmesser des Kreisscheibensegments etwa 2/3 des Durchmessers der Hauptbohrung (6) im Mündungsbereich beträgt.

5. Ventilgehäuse (1) nach einem der vorangegangen Ansprüche, wobei die Umfangserstreckung der hauptbohrungsseitigen Mündung maximal die Hälfte des Umfangs der Hauptbohrung (6) im Mündungsbereich beträgt.

6. Ventilgehäuse (1) nach Anspruch 5, wobei die Umfangserstreckung der hauptbohrungsseitigen Mündung etwa ein Viertel des Umfangs der Hauptbohrung (6) im Mündungsbereich beträgt.

7. Ventilgehäuse (1) nach einem der vorangegangen Ansprüche, wobei die Nebenbohrungen (12, 20, 22) Radialbohrungen sind, deren Längsachsen (13) die Längsachse der Hauptbohrung (6) etwa senkrecht schneiden.

## Claims

1. Valve housing (1) having a main bore (6) and at least one secondary bore (12, 20, 22, 36), the diameters of which are smaller than the diameter of the main bore (6), wherein the at least one secondary bore (12, 20, 22, 36) opens into a side wall defining the main bore (6), and wherein the at least one secondary bore (12, 20, 22, 36) is connected to the main bore (6) by a respective stress-reducing groove (14, 26, 28, 34) in order to reduce material stresses in the orifice region wherein the axial extent of an orifice, of the stress-reducing groove on the main bore side, in the direction of a longitudinal axis of the main bore (6) is substantially smaller than the circumferential extent thereof **characterized in that** the at least one stress-reducing groove (14, 26, 28, 34) has substantially the shape of a circular disk segment, the diameter of which is smaller than the diameter of the main bore (6) in the orifice region.

2. Valve housing (1) according to Claim 1, wherein each stress-reducing groove (14, 26, 28, 34) has an increase in cross section starting from an orifice on the secondary bore side up to an orifice on the main bore side.

3. Valve housing (1) according to Claim 1 or 2, wherein a cross section of the stress-reducing groove(s) (14, 26, 28, 34) is of roughly sickle-shaped design as viewed along the longitudinal axis of the main bore (6).

4. Valve housing (1) according to one of the preceding claims, wherein the diameter of the circular disk segment is about 2/3 of the diameter of the main bore (6) in the orifice region.

5. Valve housing (1) according to one of the preceding claims, wherein the circumferential extent of the orifice on the main bore side is at most half the circumference of the main bore (6) in the orifice region.

6. Valve housing (1) according to Claim 5, wherein the circumferential extent of the orifice on the main bore side is about one-quarter of the circumference of the main bore (6) in the orifice region.

7. Valve housing (1) according to one of the preceding claims, wherein the secondary bores (12, 20, 22) are radial bores, the longitudinal axes (13) of which intersect the longitudinal axis of the main bore (6) approximately at right angles.

## Revendications

1. Boîtier de soupape (1) comprenant un alésage principal (6) et au moins un alésage secondaire (12, 20, 22, 36) dont le diamètre est inférieur au diamètre de l'alésage principal (6), l'au moins un alésage secondaire (12, 20, 22, 36) débouchant dans une paroi latérale délimitant l'alésage principal (6), et l'au moins un alésage secondaire (12, 20, 22, 36) étant relié à l'alésage principal (6) par une rainure de réduction de contraintes (14, 26, 28, 34) respective afin de réduire les contraintes de matériau dans la région d'embouchure, l'étendue axiale d'une embouchure du côté de l'alésage principal de la rainure de réduction de contraintes dans la direction d'un axe longitudinal de l'alésage principal (6) étant nettement inférieure à son étendue circonférentielle, **caractérisé en ce que** l'au moins une rainure de réduction de contraintes (14, 26, 28, 34) présente essentiellement la forme d'un segment de disque circulaire dont le diamètre est inférieur au diamètre de l'alésage principal (6) dans la région d'embouchure.

2. Boîtier de soupape (1) selon la revendication 1, dans lequel chaque rainure de réduction de contraintes (14, 26, 28, 34) présente un agrandissement de section transversale à partir d'une embouchure du côté de l'alésage secondaire jusqu'à l'embouchure du côté de l'alésage principal.

3. Boîtier de soupape (1) selon la revendication 1 ou 2, dans lequel une section transversale de la/des rainure(s) de réduction de contraintes (14, 26, 28, 34) est approximativement en forme de croissant, vue le long de l'axe longitudinal de l'alésage principal (6).

4. Boîtier de soupape (1) selon l'une quelconque des revendications précédentes, dans lequel le diamètre du segment de disque circulaire vaut approximativement 2/3 du diamètre de l'alésage principal (6) dans la région d'embouchure.

5. Boîtier de soupape (1) selon l'une quelconque des revendications précédentes, dans lequel l'étendue circonférentielle de l'embouchure du côté de l'alésage principal vaut au maximum la moitié de la circonférence de l'alésage principal (6) dans la région d'embouchure.

6. Boîtier de soupape (1) selon la revendication 5, dans lequel l'étendue circonférentielle de l'embouchure du côté de l'alésage principal vaut approximativement un quart de la circonférence de l'alésage principal (6) dans la région d'embouchure.

7. Boîtier de soupape (1) selon l'une quelconque des revendications précédentes, dans lequel les alésages secondaires (12, 20, 22) sont des alésages radiaux dont les axes, longitudinaux (13) croisent approximativement perpendiculairement l'axe longitudinal de l'alésage principal (6).
